# EUROPEAN PATENT APPLICATION

(11) **EP 2 900 032 A1**
(43) Date of publication of application: **29.07.2015**
(21) Application number: 12884851.2
(22) Date of filing: 24.09.2012
(51) Int. Cl.: H04W 88/02

(54) **TERMINAL AND CONTACT LOOKUP METHOD**

(71) Applicant: Yulong Computer Telecommunication Technologies (Shenzhen) Co., Ltd., Guangdong 518075 (CN); Dongguan Yulong Telecommunication Tech Co. Ltd., Guangdong 523808 (CN)
(72) Inventor: LI, Yi, Shenzhen Guangdong 518057 (CN)
(74) Representative: Dr. Weitzel & Partner
(86) International application number: PCT/CN2012/081852
(87) International publication number: WO 2014/043921

(57) **Abstract**

The present invention provides a terminal, including: a lookup unit; a request generating unit, configured to use the terminal as a source terminal when the lookup unit fails to look up and generate a query request; a request sending unit, configured to send the query request to an associated terminal corresponding to the terminal, for enabling the associated terminal to implement the following query process: looking up, by the associated terminal, the target contact in a corresponding database according to the received query request, if finding out the target contact, sending back the information of the target contact to the source terminal, if not, re-generating the query request, or directly forwarding the received query request to other associated terminals, and then using the other terminals as the associated terminals to repeatedly implement the query process; and an information receiving unit.

## Description

### Field of the Invention

The present invention relates to the technical field of data query, and in particular relates to a terminal and a contact lookup method.

### Background of the Invention

In various existing mobile terminals, when looking up a contact, a user looks up a contact database or a cloud database of his own terminal, when a query result could not be obtained through these manners, a possible approach is to find a phone and inquire familiar people, the process is tedious and is liable to delay the time and effort of the user, moreover, the familiar people do not necessarily know the contact information needing to be found, thus the success rate could not be guaranteed. Therefore, a new contact lookup technology is needed, for looking up contact information absent in an own address book from the databases of other users.

### Summary of the Invention

Based on the above-mentioned problems, the present invention provides a new contact lookup technology, which may be used for finding contact information absent in an own address book from the databases of other users.

For this purpose, the present invention provides a terminal, including: a lookup unit, configured to look up a target contact from a database corresponding to the terminal; a request generating unit, configured to use the terminal as a source terminal when the lookup unit fails to look up and generate a query request corresponding to the source terminal and the target contact; a request sending unit, configured to send the query request to an associated terminal corresponding to the terminal, for enabling the associated terminal to implement the following query process: looking up, by the associated terminal, the target contact in a corresponding database according to the received query request, if finding out the target contact, sending back the information of the target contact to the source terminal, if not, re-generating the query request, and sending the query request to other associated terminals, or directly forwarding the received query request to other associated terminals, and then using the other terminals as the associated terminals to repeatedly implement the query process; and an information receiving unit, configured to receive the information of the target contact corresponding to the query request.

In the technical solution, the database corresponding to each terminal includes a local contact database and/or a cloud database, the local contact database is stored in the terminal, and the cloud database establishes an incidence relation with the terminal through an appointed identification code (e.g., a terminal number and the like). When the source terminal could not find the necessary contact information in its own database, the source terminal may look up the contact information from other terminals associated with the source terminal, for example, contacts exist in the database of the source terminal, if failing to find out the contact information in the databases corresponding to these terminals, these terminals associated with the source terminal may make further lookup, and so on, a similar tree-shaped terminal structure diagram may be formed, beginning from the source terminal, downward lookup is made grade by grade (a terminal A sends to a terminal B1 and a terminal B2, the terminal B1 sends to a terminal C11 and a terminal C12, and the terminal B2 sends to a terminal C21 ......), so that the size of the looked up database is greatly expanded, and the chance of finding out the information of the target contact is increased. Since the above-mentioned processes may be completed at the backgrounds of the terminals, no other contacts will be interfered. Of course, taking the security of the information of the other terminals into consideration, after receiving the query request, the lookup is implemented again after the confirmation of the users of the other terminals, or the lookup may be prohibited.

In the above-mentioned technical solution, preferably, the terminal further includes an information setting unit, configured to set the basic information of the target contact according to a received information setting command, in order to determine the terminal associated with the source terminal, wherein the basic information includes at least one of the following items or the combination thereof: a user group to which the target contact belongs, an attribution and other associated contacts.

In the technical solution, by setting the basic information of the target contact to be found, more contacts possible to have the information of the target contact may be screened from the database of the user terminal, in order to shorten the lookup time and increase the success rate.

In any above-mentioned technical solution, preferably, the terminal further includes a data obtaining unit, configured to obtain the communication number/frequency of the source terminal with the other associated contacts; and a numerical value comparing unit and/or a sequencing unit, wherein the numerical value comparing unit is configured to select a corresponding terminal to use as the terminal associated with the source terminal when the communication number/frequency is larger than or equal to a preset numerical value; the sequencing unit is configured to sequence the other contacts and use the terminals corresponding to a preset number of other foremost sequenced contacts as the terminals associated with the source terminal.

In the technical solution, the more/frequenter contact with itself, the higher the possibility of receiving the query request is, thereby shortening the lookup time and increasing the successful lookup probability. The communication herein may include a call, a short message, an email, social network interaction information, and the like. In any above-mentioned technical solution, preferably, the terminal further includes an association setting unit, configured to determine the terminal associated with the source terminal according to a received association setting command.

In the technical solution, the user may manually select the associated terminal and send the query request to the terminal considered to find the information of the target contact possibly, in order to increase the successful lookup probability.

In any above-mentioned technical solution, preferably, the terminal further includes a times setting unit, configured to set an allowable forwarding time according to a received time setting command, such that the request generating unit generates the query request corresponding to the source terminal, the target contact and the allowable forwarding times, and the terminal receiving the query request judges the allowable forwarding times if the allowable forwarding time is larger than or equal to 1, subtracts 1 from the allowable forwarding times to obtain a new allowable forwarding time, re-generates a new query request corresponding to the source terminal, the target contact and the allowable forwarding times, and sends the new query request to the other associated terminals.

In the technical solution, after receiving the query request forwarded for multiple times, the information of the target contact is still not found possibly, then continuous forwarding and lookup will be continued, for the terminal (source terminal) initiating the query request, if the initially set associated terminal has an error particularly, the terminal may unlimitedly wait, resulting in long-time no response to influence the user experience. Therefore, the forwarding times may be set, if the information of the target contact is still not found within the set limited forwarding times, failure information is sent back to the source terminal.

In any above-mentioned technical solution, preferably, the terminal further includes a compiling unit, configured to pack the query request to be sent into a request short message to send the query request to the associated terminal, wherein the associated terminal detects an appointed field of the received short message, judges that the received short message is the request short message if the appointed field conforms to a preset field, and analyzes the query request from the request short message to look up the corresponding target contact.

In the technical solution, the query request may be sent through a short message, this short message is provided with a particular field to be distinguished from a common short message, for enabling the terminal to effectively distinguish the type of the received short message and process the short message in time.

According to another aspect of the present invention, a contact lookup method is further provided, including: step 202, looking up a target contact from a database corresponding to a source terminal, generating a query request corresponding to the source terminal and the target contact in the case of lookup failure, and sending the query request to an associated terminal; step 204, obtaining the information of the target contact, wherein the information of the target contact is found by the associated terminal in the corresponding database according to the received query request, if not finding out the information of the target contact, the associated terminal re-generates the query request, and sends the query request to other associated terminals, or directly forwards the received query request to other associated terminals, and then uses the other terminals as the associated terminals to repeatedly implement step 204. In the technical solution, the database corresponding to each terminal includes a local contact database and/or a cloud database, the local contact database is stored in the terminal, and the cloud database establishes an incidence relation with the terminal through an appointed identification code (e.g., a terminal number and the like). When the source terminal could not find out the necessary contact information in its own database, the source terminal may look up the contact information from other terminals associated with the source terminal, for example, contacts exist in the database of the source terminal, if failing to the find out the contact information in the databases corresponding to these terminals, these terminals associated with the source terminal may make further lookup, and so on, a similar tree-shaped terminal structure diagram may be formed, beginning from the source terminal, downward lookup is made grade by grade (a terminal A sends to a terminal B1 and a terminal B2, the terminal B1 sends to a terminal C11 and a terminal C12, and the terminal B2 sends to a terminal C21 ......), so that the size of the looked up database is greatly expanded, and the chance of finding out the information of the target contact is increased. Since the above-mentioned processes may be completed at the backgrounds of the terminals, no other contacts will be interfered. Of course, taking the security of the information of the other terminals into consideration, after receiving the query request, the lookup is implemented after the confirmation of the users of the other terminals, or the lookup may be prohibited.

In the above-mentioned technical solution, preferably, step 202 further includes: setting the basic information of the target contact according to a received information setting command, in order to determine the terminal associated with the source terminal, wherein the basic information includes at least one of the following items or the combination thereof: a user group to which the target contact belongs, an attribution and other associated contacts.

In the technical solution, by setting the basic information of the target contact to be found, more contacts possible to have the information of the target contact may be screened from the database of the user terminal, in order to shorten the lookup time and increase the success rate.

In any above-mentioned technical solution, preferably, step 202 further includes: obtaining the communication number/frequency of the source terminal with the other associated contacts, and selecting a corresponding terminal to use as the terminal associated with the source terminal when the communication number/frequency is larger than or equal to a preset numerical value; and/or, sequencing the other contacts according to the communication number/frequency, and using the terminals corresponding to a preset number of other foremost sequenced contacts as the terminals associated with the source terminal.

In the technical solution, the more/frequenter contact with itself, the higher the possibility of receiving the query request is, thereby shortening the lookup time and increasing the successful lookup probability. The communication herein may include a call, a short message, an email, social network interaction information, and the like. In any above-mentioned technical solution, preferably, step 202 further includes: determining the terminal associated with the source terminal according to a received association setting command.

In the technical solution, the user may manually select the associated terminal and send the query request to the terminal considered to find out the information of the target contact possibly, in order to increase the successful lookup probability.

In any above-mentioned technical solution, preferably, the method further includes: the query request includes a preset allowable forwarding time, if the allowable forwarding time obtained from the received query request is larger than or equal to 1, subtracting 1 from the allowable forwarding times to obtain a new allowable forwarding time; re-generating a new query request corresponding to the source terminal, the target contact and the allowable forwarding times, and sending the new query request to the other associated terminals.

In the technical solution, after receiving the query request forwarded for multiple times, the information of the target contact is still not found possibly, then continuous forwarding and lookup will be continued, for the terminal (source terminal) initiating the query request, if the initially set associated terminal has an error particularly, the terminal may unlimitedly wait, resulting in long-time no response to influence the user experience. Therefore, the forwarding times may be set, if the information of the target contact is still not found within the set limited forwarding times, failure information is sent back to the source terminal.

In any above-mentioned technical solution, preferably, the method further includes: packing the query request to be sent into a request short message to send the query request to the associated terminal, wherein the associated terminal detects an appointed field of the received short message, judges that the received short message is the request short message if the appointed field conforms to a preset field, and analyzes the query request from the request short message to look up the corresponding target contact.

In the technical solution, the query request may be sent through a short message, this short message is provided with a particular field to be distinguished from a common short message, for enabling the terminal to effectively distinguish the type of the received short message and process the short message in time.

The present invention further provides a terminal, including: a request receiving unit, configured to receive a query request from other terminals; a lookup unit, configured to look up a target contact from a corresponding database according to the query request; an information sending unit, configured to analyze a source terminal from the query request when the lookup unit looks up successfully, and send the information of the target contact to the source terminal; and a request sending unit, configured to send the re-generated query request to the associated terminal when the lookup unit fails to look up, or directly forward the received query request to the associated terminal, for enabling the associated terminal to continue to look up the target contact. In the technical solution, the database corresponding to each terminal includes a local contact database and/or a cloud database, the local contact database is stored in the terminal, and the cloud database establishes an incidence relation with the terminal through an appointed identification code (e.g., a terminal number and the like). When the source terminal could not find out the necessary contact information in its own database, the source terminal may look up the contact information from other terminals associated with the source terminal, for example, contacts exist in the database of the source terminal, if failing to the find out the contact information in the databases corresponding to these terminals, these terminals associated with the source terminal may make further lookup, and so on, a similar tree-shaped terminal structure diagram may be formed, beginning from the source terminal, downward lookup is made grade by grade (a terminal A sends to a terminal B1 and a terminal B2, the terminal B1 sends to a terminal C11 and a terminal C12, and the terminal B2 sends to a terminal C21 ......), so that the size of the looked up database is greatly expanded, and the chance of finding out the information of the target contact is increased. Since the above-mentioned processes may be completed at the backgrounds of the terminals, no other contacts will be interfered. Of course, taking the security of the information of the other terminals into consideration, after receiving the query request, the lookup is implemented after the confirmation of the users of the other terminals, or the lookup may be prohibited.

In the above-mentioned technical solution, preferably, the terminal further includes an information setting unit, configured to set the basic information of the target contact according to a received information setting command, in order to determine the associated terminal, wherein the basic information includes at least one of the following items or the combination thereof: a user group to which the target contact belongs, an attribution and other associated contacts.

In the technical solution, by setting the basic information of the target contact to be found, more contacts possible to have the information of the target contact may be screened from the database of the user terminal, in order to shorten the lookup time and increase the success rate.

In any above-mentioned technical solution, preferably, the terminal further includes a data obtaining unit, configured to obtain the communication number/frequency of the source terminal with the other associated contacts; and a numerical value comparing unit and/or a sequencing unit, wherein the numerical value comparing unit is configured to select a corresponding terminal to use as the associated terminal when the communication number/frequency is larger than or equal to a preset numerical value; and the sequencing unit is configured to sequence the other contacts and use the terminals corresponding to a preset number of other foremost sequenced contacts as the associated terminals.

In the technical solution, the more/frequenter contact with itself, the higher the possibility of receiving the query request is, thereby shortening the lookup time and increasing the successful lookup probability. The communication herein may include a call, a short message, an email, social network interaction information, and the like. In any above-mentioned technical solution, preferably, the terminal further includes an association setting unit, configured to determine the terminal associated with the source terminal according to a received association setting command.

In the technical solution, the user may manually select the associated terminal and send the query request to the terminal considered to find out the information of the target contact possibly, in order to increase the successful lookup probability.

In any above-mentioned technical solution, preferably, the query request includes a preset allowable forwarding time, then the terminal further includes: a times judging unit, configured to judge whether the allowable forwarding time obtained from the received query request is larger than or equal to 1; a times processing unit, configured to subtract 1 from the allowable forwarding times to obtain a new allowable forwarding time if the judging result of the times judging unit is yes; and a request generating unit, configured to generate a new query request corresponding to the source terminal, the target contact and the allowable forwarding times, and the request sending unit sends the new query request to the other associated terminals.

In the technical solution, after receiving the query request forwarded for multiple times, the information of the target contact is still not found possibly, then continuous forwarding and lookup will be continued, for the terminal (source terminal) initiating the query request, if the initially set associated terminal has an error particularly, the terminal may unlimitedly wait, resulting in long-time no response to influence the user experience. Therefore, the forwarding times may be set, if the information of the target contact is still not found within the set limited forwarding times, failure information is sent back to the source terminal.

In any above-mentioned technical solution, preferably, the terminal further includes a field detecting unit, configured to detect an appointed field of a received short message, and judge that the received short message is a request short message if the appointed field conforms to a preset field; and an analyzing unit, configured to analyze the query request from the request short message, for enabling the lookup unit to look up the corresponding target contact, when the field detecting unit judges that the short message is the request short message.

In any above-mentioned technical solution, preferably, the terminal further includes a compiling unit, configured to pack the query request to be sent into a request short message to send the query request to the associated terminal.

In the technical solution, the query request may be sent through a short message, this short message is provided with a particular field to be distinguished from a common short message, for enabling the terminal to effectively distinguish the type of the received short message and process the short message in time.

According to the third aspect of the present invention, the present invention further provides a contact lookup method, including: receiving a query request from other terminals, and looking up a target contact from a corresponding database according to the query request; analyzing a source terminal from the query request when the lookup is successful, and sending the information of the target contact to the source terminal, if not, re-generating the query request, and sending the re-generated query request to the associated terminal, or directly forwarding the received query request to the associated terminal, for enabling the associated terminal to continue to look up the target contact.

In the technical solution, the database corresponding to each terminal includes a local contact database and/or a cloud database, the local contact database is stored in the terminal, and the cloud database establishes an incidence relation with the terminal through an appointed identification code (e.g., a terminal number and the like). When the source terminal could not find out the necessary contact information in its own database, the source terminal may look up the contact information from other terminals associated with the source terminal, for example, contacts exist in the database of the source terminal, if failing to find out the contact information in the databases corresponding to these terminals, these terminals associated with the source terminal may make further lookup, and so on, a similar tree-shaped terminal structure diagram may be formed, beginning from the source terminal, downward lookup is made grade by grade (a terminal A sends to a terminal B1 and a terminal B2, the terminal B1 sends to a terminal C11 and a terminal C12, and the terminal B2 sends to a terminal C21 ......), so that the size of the looked up database is greatly expanded, and the chance of finding out the information of the target contact is increased. Since the above-mentioned processes may be completed at the backgrounds of the terminals, no other contacts will be interfered. Of course, taking the security of the information of the other terminals into consideration, after receiving the query request, the lookup is implemented after the confirmation of the users of the other terminals, or the lookup may be prohibited.

In the above-mentioned technical solution, preferably, before sending the query request, the method further includes: setting the basic information of the target contact according to a received information setting command, in order to determine the associated terminal, wherein the basic information includes at least one of the following items or the combination thereof: a user group to which the target contact belongs, an attribution and other associated contacts.

In the technical solution, by setting the basic information of the target contact to be found, more contacts possible to have the information of the target contact may be screened from the database of the user terminal, in order to shorten the lookup time and increase the success rate.

In any above-mentioned technical solution, preferably, the method further includes: obtaining the communication number/frequency with the other associated contacts, and when the communication number/frequency is larger than or equal to a preset numerical value, selecting a corresponding terminal to use as the associated terminal; and/or, sequencing the other contacts according to the communication number/frequency, and using the terminals corresponding to a preset number of other foremost sequenced contacts as the associated terminals.

In the technical solution, the more/frequenter contact with itself, the higher the possibility of receiving the query request is, thereby shortening the lookup time and increasing the successful lookup probability. The communication herein may include a call, a short message, an email, social network interaction information, and the like. In any above-mentioned technical solution, preferably, before sending the query request, the method further includes: determining the associated terminal according to a received lookup setting command.

In the technical solution, the user may manually select the associated terminal and send the query request to the terminal considered to find out the information of the target contact possibly, in order to increase the successful lookup probability.

In any above-mentioned technical solution, preferably, the query request includes a preset allowable forwarding time; in the case of lookup failure, if the allowable forwarding time obtained from the received query request is larger than or equal to 1, 1 is subtracted from the allowable forwarding times to obtain a new allowable forwarding time; and a new query request corresponding to the source terminal, the target contact and the allowable forwarding times is re-generated, and the new query request is sent to the associated terminal.

In the technical solution, after receiving the query request forwarded for multiple times, the information of the target contact is still not found possibly, then continuous forwarding and lookup will be continued, for the terminal (source terminal) initiating the query request, if the initially set associated terminal has an error particularly, the terminal may unlimitedly wait, resulting in long-time no response to influence the user experience. Therefore, the forwarding times may be set, if the information of the target contact is still not found within the set limited forwarding times, failure information is sent back to the source terminal.

In any above-mentioned technical solution, preferably, the method further includes: detecting an appointed field of a received short message, judging that the received short message is the request short message if the appointed field conforms to a preset field, and analyzing the query request from the request short message, to look up the corresponding target contact.

In any above-mentioned technical solution, preferably, the method further includes: packing the query request to be sent into a request short message to send the query request to the associated terminal.

In the technical solution, the query request may be sent through a short message, this short message is provided with a particular field to be distinguished from a common short message, for enabling the terminal to effectively distinguish the type of the received short message and process the short message in time.

By means of the above-mentioned technical solutions, contact information absent in an own address book may be found from the databases of other users.

### Brief Description of the Drawings

Fig. 1 shows a block diagram of a terminal according to an embodiment of the present invention;
Fig. 2 shows a flow diagram of a contact lookup method according to an embodiment of the present invention;
Fig. 3 shows a block diagram of a terminal according to another embodiment of the present invention;
Fig. 4 shows a flow diagram of a contact lookup method according to another embodiment of the present invention;
Fig. 5 shows a schematic diagram of a flow of a terminal according to an embodiment of the present invention for sending a query request;
Fig. 6 shows a schematic diagram of a flow of a terminal according to an embodiment of the present invention for receiving a query request; and
Fig. 7 shows a schematic diagram of a structure of terminals for querying a contact according to an embodiment of the present invention.

### Detailed Description of the Embodiments

To understand the above purposes, features and advantages of the present invention more clearly, the present invention will be further described in detail below in combination with the accompanying drawings and specific embodiments. It should be noted that, the embodiments of the present application and the features in the embodiments may be combined with one another without conflicts.

Many specific details are described below to fully understand the present invention. However, the present invention may also be implemented by adopting other manners different from those described herein. Accordingly, the protection scope of the present invention is not limited to the specific embodiments disclosed below.

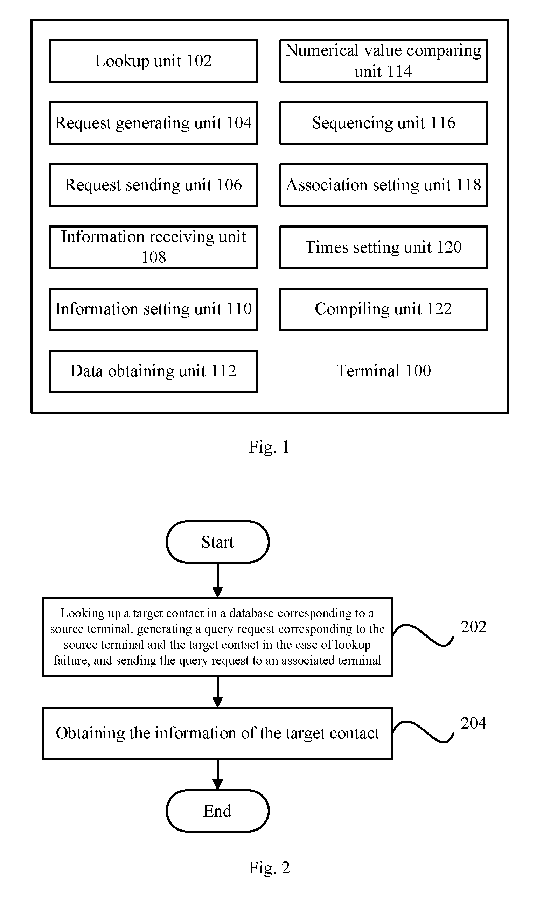

Fig. 1 shows a block diagram of a terminal according to an embodiment of the present invention;

As shown in Fig. 1, a terminal 100 according to an embodiment of the present invention includes a lookup unit 102, configured to look up a target contact from a database corresponding to the terminal 100; a request generating unit 104, configured to use the terminal 100 as a source terminal when the lookup unit 102 fails to look up and generate a query request corresponding to the source terminal and the target contact; a request sending unit 106, configured to send the query request to an associated terminal corresponding to the terminal 100, for enabling the associated terminal to implement the following query process: looking up, by the associated terminal, the target contact in a corresponding database according to the received query request, if finding out the target contact, sending back the information of the target contact to the source terminal, if not, re-generating the query request, and sending the query request to other associated terminals, or directly forwarding the received query request to other associated terminals, and then using the other terminals as the associated terminals to repeatedly implement the query process; and an information receiving unit 108, configured to receive the information of the target contact corresponding to the query request.

In the technical solution, the database corresponding to each terminal (including a source terminal and other terminals) includes a local contact database and/or a cloud database, the local contact database is stored in the terminal, and the cloud database establishes an incidence relation with the terminal through an appointed identification code (e.g., a terminal number and the like). When the source terminal could not find out the necessary contact information in its own database, the source terminal may look up the contact information from other terminals associated with the source terminal, for example, contacts exist in the database of the source terminal, if failing to find out the contact information in the databases corresponding to these terminals, these terminals associated with the source terminal may make further lookup, and so on, a similar tree-shaped terminal structure diagram may be formed, beginning from the source terminal, downward lookup is made grade by grade (a terminal A sends to a terminal B1 and a terminal B2, the terminal B1 sends to a terminal C11 and a terminal C12, and the terminal B2 sends to a terminal C21 ......), so that the size of the looked up database is greatly expanded, and the chance of finding out the information of the target contact is increased. Since the above-mentioned processes may be completed at the backgrounds of the terminals, no other contacts will be interfered. Of course, taking the security of the information of the other terminals into consideration, after receiving the query request, the lookup is implemented after the confirmation of the users of the other terminals, or the lookup may be prohibited.

In the above-mentioned technical solution, preferably, the terminal further includes an information setting unit 110, configured to set the basic information of the target contact according to a received information setting command, in order to determine the terminal associated with the source terminal, wherein the basic information includes at least one of the following items or the combination thereof: a user group to which the target contact belongs, an attribution and other associated contacts.

In the technical solution, by setting the basic information of the target contact to be found, more contacts possible to have the information of the target contact may be screened from the database of the user terminal, in order to shorten the lookup time and increase the success rate.

In any above-mentioned technical solution, preferably, the terminal further includes a data obtaining unit 112, configured to obtain the communication number/frequency of the source terminal with the other associated contacts; and a numerical value comparing unit 114 and/or a sequencing unit 116, wherein the numerical value comparing unit 114 is configured to select a corresponding terminal to use as the terminal associated with the source terminal when the communication number/frequency is larger than or equal to a preset numerical value; the sequencing unit 116 is configured to sequence the other contacts and use the terminals corresponding to a preset number of other foremost sequenced contacts as the terminals associated with the source terminal.

In the technical solution, the more/frequenter contact with itself, the higher the possibility of receiving the query request is, thereby shortening the lookup time and increasing the successful lookup probability. The communication herein may include a call, a short message, an email, social network interaction information, and the like. In any above-mentioned technical solution, preferably, the terminal further includes an association setting unit 118, configured to determine the terminal associated with the source terminal according to a received association setting command.

In the technical solution, the user may manually select the associated terminal and send the query request to the terminal considered to find out the information of the target contact possibly, in order to increase the successful lookup probability.

In any above-mentioned technical solution, preferably, the terminal further includes a times setting unit 120, configured to set an allowable forwarding time according to a received time setting command, such that the request generating unit 104 generates the query request corresponding to the source terminal, the target contact and the allowable forwarding times, and the terminal receiving the query request judges the allowable forwarding times if the allowable forwarding time is larger than or equal to 1, subtracts 1 from the allowable forwarding times to obtain a new allowable forwarding time, re-generates a new query request corresponding to the source terminal, the target contact and the allowable forwarding times, and sends the new query request to the other associated terminals.

In the technical solution, after receiving the query request forwarded for multiple times, the information of the target contact is still not found possibly, then continuous forwarding and lookup will be continued, for the terminal (source terminal) initiating the query request, if the initially set associated terminal has an error particularly, the terminal may unlimitedly wait, resulting in long-time no response to influence the user experience. Therefore, the forwarding times may be set, if the information of the target contact is still not found within the set limited forwarding times, failure information is sent back to the source terminal.

In any above-mentioned technical solution, preferably, the terminal further includes a compiling unit 122, configured to pack the query request to be sent into a request short message to send the query request to the associated terminal, wherein the associated terminal detects an appointed field of the received short message, judges that the received short message is the request short message if the appointed field conforms to a preset field, and analyzes the query request from the request short message to look up the corresponding target contact.

In the technical solution, the query request may be sent through a short message, this short message is provided with a particular field to be distinguished from a common short message, for enabling the terminal to effectively distinguish the type of the received short message and process the short message in time.

Fig. 2 shows a flow diagram of a contact lookup method according to an embodiment of the present invention.

As shown in Fig. 2, the contact lookup method according to an embodiment of the present invention includes: step 202, looking up a target contact from a database corresponding to a source terminal, generating a query request corresponding to the source terminal and the target contact in the case of lookup failure, and sending the query request to an associated terminal; step 204, obtaining the information of the target contact, wherein the information of the target contact is found by the associated terminal in the corresponding database according to the received query request, if not finding out the information of the target contact, the associated terminal re-generates the query request, and sends the query request to other associated terminals, or directly forwards the received query request to other associated terminals, and then uses the other terminals as the associated terminals to repeatedly implement step 204. In the technical solution, the database corresponding to each terminal includes a local contact database and/or a cloud database, the local contact database is stored in the terminal, and the cloud database establishes an incidence relation with the terminal through an appointed identification code (e.g., a terminal number and the like). When the source terminal could not find out the necessary contact information in its own database, the source terminal may look up the contact information from other terminals associated with the source terminal, for example, contacts exist in the database of the source terminal, if failing to find out the contact information in the databases corresponding to these terminals, these terminals associated with the source terminal may make further lookup, and so on, a similar tree-shaped terminal structure diagram may be formed, beginning from the source terminal, downward lookup is made grade by grade (a terminal A sends to a terminal B1 and a terminal B2, the terminal B1 sends to a terminal C11 and a terminal C12, and the terminal B2 sends to a terminal C21 ......), so that the size of the looked up database is greatly expanded, and the chance of finding out the information of the target contact is increased. Since the above-mentioned processes may be completed at the backgrounds of the terminals, no other contacts will be interfered. Of course, taking the security of the information of the other terminals into consideration, after receiving the query request, the lookup is implemented after the confirmation of the users of the other terminals, or the lookup may be prohibited.

In the above-mentioned technical solution, preferably, step 202 further includes: setting the basic information of the target contact according to a received information setting command, in order to determine the terminal associated with the source terminal, wherein the basic information includes at least one of the following items or the combination thereof: a user group to which the target contact belongs, an attribution and other associated contacts.

In the technical solution, by setting the basic information of the target contact to be found, more contacts possible to have the information of the target contact may be screened from the database of the user terminal, in order to shorten the lookup time and increase the success rate.

In any above-mentioned technical solution, preferably, step 202 further includes: obtaining the communication number/frequency of the source terminal with the other associated contacts, and selecting a corresponding terminal to use as the terminal associated with the source terminal when the communication number/frequency is larger than or equal to a preset numerical value; and/or, sequencing the other contacts according to the communication number/frequency, and using the terminals corresponding to a preset number of other foremost sequenced contacts as the terminals associated with the source terminal.

In the technical solution, the more/frequenter contact with itself, the higher the possibility of receiving the query request is, thereby shortening the lookup time and increasing the successful lookup probability. The communication herein may include a call, a short message, an email, social network interaction information, and the like. In any above-mentioned technical solution, preferably, step 202 further includes: determining the terminal associated with the source terminal according to a received association setting command.

In the technical solution, the user may manually select the associated terminal and send the query request to the terminal considered to find out the information of the target contact possibly, in order to increase the successful lookup probability.

In any above-mentioned technical solution, preferably, the method further includes: the query request includes a preset allowable forwarding time, if the allowable forwarding time obtained from the received query request is larger than or equal to 1, subtracting 1 from the allowable forwarding times to obtain a new allowable forwarding time; re-generating a new query request corresponding to the source terminal, the target contact and the allowable forwarding times, and sending the new query request to the other associated terminals.

In the technical solution, after receiving the query request forwarded for multiple times, the information of the target contact is still not found possibly, then continuous forwarding and lookup will be continued, for the terminal (source terminal) initiating the query request, if the initially set associated terminal has an error particularly, the terminal may unlimitedly wait, resulting in long-time no response to influence the user experience. Therefore, the forwarding times may be set, if the information of the target contact is still not found within the set limited forwarding times, failure information is sent back to the source terminal.

In any above-mentioned technical solution, preferably, the method further includes: packing the query request to be sent into a request short message to send the query request to the associated terminal, wherein the associated terminal detects an appointed field of the received short message, judges that the received short message is the request short message if the appointed field conforms to a preset field, and analyzes the query request from the request short message to look up the corresponding target contact.

In the technical solution, the query request may be sent through a short message, this short message is provided with a particular field to be distinguished from a common short message, for enabling the terminal to effectively distinguish the type of the received short message and process the short message in time.

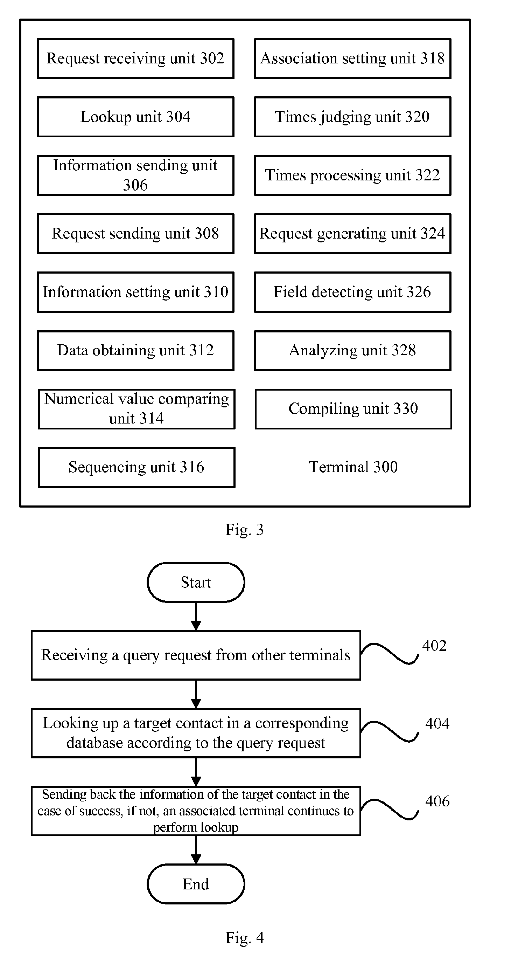

Fig. 3 shows a block diagram of a terminal according to another embodiment of the present invention.

As shown in Fig. 3, the terminal 300 according to another embodiment of the present invention includes: a request receiving unit 302, configured to receive a query request from other terminals; a lookup unit 304, configured to look up a target contact from a corresponding database according to the query request; an information sending unit 306, configured to analyze a source terminal from the query request when the lookup unit 304 looks up successfully, and send the information of the target contact to the source terminal; a request sending unit 308, configured to send the re-generated query request to the associated terminal when the lookup unit 304 fails to look up, or directly forward the received query request to the associated terminal, for enabling the associated terminal to continue to look up the target contact.

In the technical solution, the database corresponding to each terminal includes a local contact database and/or a cloud database, the local contact database is stored in the terminal, and the cloud database establishes an incidence relation with the terminal through an appointed identification code (e.g., a terminal number and the like). When the source terminal could not find out the necessary contact information in its own database, the source terminal may look up the contact information from other terminals associated with the source terminal, for example, contacts exist in the database of the source terminal, if failing to find out the contact information in the databases corresponding to these terminals, these terminals associated with the source terminal may make further lookup, and so on, a similar tree-shaped terminal structure diagram may be formed, beginning from the source terminal, downward lookup is made grade by grade (a terminal A sends to a terminal B1 and a terminal B2, the terminal B1 sends to a terminal C11 and a terminal C12, and the terminal B2 sends to a terminal C21 ......), so that the size of the looked up database is greatly expanded, and the chance of finding out the information of the target contact is increased. Since the above-mentioned processes may be completed at the backgrounds of the terminals, no other contacts will be interfered. Of course, taking the security of the information of the other terminals into consideration, after receiving the query request, the lookup is implemented after the confirmation of the users of the other terminals, or the lookup may be prohibited.

In the above-mentioned technical solution, preferably, the terminal further includes an information setting unit 310, configured to set the basic information of the target contact according to a received information setting command, in order to determine the associated terminal, wherein the basic information includes at least one of the following items or the combination thereof: a user group to which the target contact belongs, an attribution and other associated contacts.

In the technical solution, by setting the basic information of the target contact to be found, more contacts possible to have the information of the target contact may be screened from the database of the user terminal, in order to shorten the lookup time and increase the success rate.

In any above-mentioned technical solution, preferably, the terminal further includes a data obtaining unit 312, configured to obtain the communication number/frequency of the terminal 300 with the other associated contacts; and a numerical value comparing unit 314 and/or a sequencing unit 316, wherein the numerical value comparing unit 314 is configured to select a corresponding terminal to use as the associated terminal when the communication number/frequency is larger than or equal to a preset numerical value; and the sequencing unit 316 is configured to sequence the other contacts and use the terminals corresponding to a preset number of other foremost sequenced contacts as the associated terminals.

In the technical solution, the more/frequenter contact with itself, the higher the possibility of receiving the query request is, thereby shortening the lookup time and increasing the successful lookup probability. The communication herein may include a call, a short message, an email, social network interaction information, and the like. In any above-mentioned technical solution, preferably, the terminal further includes an association setting unit 318, configured to determine the terminal associated with the source terminal according to a received association setting command.

In the technical solution, the user may manually select the associated terminal and send the query request to the terminal considered to find out the information of the target contact possibly, in order to increase the successful lookup probability.

In any above-mentioned technical solution, preferably, the query request includes a preset allowable forwarding time, then the terminal 300 further includes: a times judging unit 320, configured to judge whether the allowable forwarding time obtained from the received query request is larger than or equal to 1; a times processing unit 322, configured to subtract 1 from the allowable forwarding times to obtain a new allowable forwarding time if the judging result of the times judging unit 320 is yes; and a request generating unit 324, configured to generate a new query request corresponding to the source terminal, the target contact and the allowable forwarding times, and the request sending unit 308 sends the new query request to the other associated terminals.

In the technical solution, after receiving the query request forwarded for multiple times, the information of the target contact is still not found possibly, then continuous forwarding and lookup will be continued, for the terminal (source terminal) initiating the query request, if the initially set associated terminal has an error particularly, the terminal may unlimitedly wait, resulting in long-time no response to influence the user experience. Therefore, the forwarding times may be set, if the information of the target contact is still not found within the set limited forwarding times, failure information is sent back to the source terminal.

In any above-mentioned technical solution, preferably, the terminal further includes a field detecting unit 326, configured to detect an appointed field of a received short message, and judge that the received short message is a request short message if the appointed field conforms to a preset field; an analyzing unit 328, configured to analyze the query request from the request short message, for enabling the lookup unit 304 to look up the corresponding target contact, when the field detecting unit 326 judges that the short message is the request short message.

In any above-mentioned technical solution, preferably, the terminal further includes a compiling unit 330, configured to pack the query request to be sent into a request short message to send the query request to the associated terminal.

In the technical solution, the query request may be sent through a short message, this short message is provided with a particular field to be distinguished from a common short message, for enabling the terminal to effectively distinguish the type of the received short message and process the short message in time.

Fig. 4 shows a flow diagram of a contact lookup method according to another embodiment of the present invention.

As shown in Fig. 4, a contact lookup method according to another embodiment of the present invention includes: step 402, receiving a query request from other terminals; step 404, looking up a target contact from a corresponding database according to the query request; step 406, analyzing a source terminal from the query request when the lookup is successful, and sending the information of the target contact to the source terminal, if not, re-generating the query request, and sending the re-generated query request to the associated terminal, or directly forwarding the received query request to the associated terminal, for enabling the associated terminal to continue to look up the target contact.

In the technical solution, the database corresponding to each terminal includes a local contact database and/or a cloud database, the local contact database is stored in the terminal, and the cloud database establishes an incidence relation with the terminal through an appointed identification code (e.g., a terminal number and the like). When the source terminal could not find out the necessary contact information in its own database, the source terminal may look up the contact information from other terminals associated with the source terminal, for example, contacts exist in the database of the source terminal, if failing to find out the contact information in the databases corresponding to these terminals, these terminals associated with the source terminal may make further lookup, and so on, a similar tree-shaped terminal structure diagram may be formed, beginning from the source terminal, downward lookup is made grade by grade (a terminal A sends to a terminal B1 and a terminal B2, the terminal B1 sends to a terminal C11 and a terminal C12, and the terminal B2 sends to a terminal C21 ......), so that the size of the looked up database is greatly expanded, and the chance of finding out the information of the target contact is increased. Since the above-mentioned processes may be completed at the backgrounds of the terminals, no other contacts will be interfered. Of course, taking the security of the information of the other terminals into consideration, after receiving the query request, the lookup is implemented after the confirmation of the users of the other terminals, or the lookup may be prohibited.

In the above-mentioned technical solution, preferably, before sending the query request, the method further includes: setting the basic information of the target contact according to a received information setting command, in order to determine the associated terminal, wherein the basic information includes at least one of the following items or the combination thereof: a user group to which the target contact belongs, an attribution and other associated contacts.

In the technical solution, by setting the basic information of the target contact to be found, more contacts possible to have the information of the target contact may be screened from the database of the user terminal, in order to shorten the lookup time and increase the success rate.

In any above-mentioned technical solution, preferably, the method further includes: obtaining the communication number/frequency with the other associated contacts, and when the communication number/frequency is larger than or equal to a preset numerical value, selecting a corresponding terminal to use as the associated terminal; and/or, sequencing the other contacts according to the communication number/frequency, and using the terminals corresponding to a preset number of other foremost sequenced contacts as the associated terminals.

In the technical solution, the more/frequenter contact with itself, the higher the possibility of receiving the query request is, thereby shortening the lookup time and increasing the successful lookup probability. The communication herein may include a call, a short message, an email, social network interaction information, and the like. In any above-mentioned technical solution, preferably, before sending the query request, the method further includes: determining the associated terminal according to a received lookup setting command.

In the technical solution, the user may manually select the associated terminal and send the query request to the terminal considered to find out the information of the target contact possibly, in order to increase the successful lookup probability.

In any above-mentioned technical solution, preferably, the query request includes a preset allowable forwarding time; in the case of lookup failure, if the allowable forwarding time obtained from the received query request is larger than or equal to 1, 1 is subtracted from the allowable forwarding times to obtain a new allowable forwarding time; and a new query request corresponding to the source terminal, the target contact and the new allowable forwarding times is re-generated, and the new query request is sent to the associated terminal.

In the technical solution, after receiving the query request forwarded for multiple times, the information of the target contact is still not found possibly, then continuous forwarding and lookup will be continued, for the terminal (source terminal) initiating the query request, if the initially set associated terminal has an error particularly, the terminal may unlimitedly wait, resulting in long-time no response to influence the user experience. Therefore, the forwarding times may be set, if the information of the target contact is still not found within the set limited forwarding times, failure information is sent back to the source terminal.

In any above-mentioned technical solution, preferably, the method further includes: detecting an appointed field of a received short message, judging that the received short message is the request short message if the appointed field conforms to a preset field, and analyzing the query request from the request short message, to look up the corresponding target contact.

In any above-mentioned technical solution, preferably, the method further includes: packing the query request to be sent into a request short message to send the query request to the associated terminal.

In the technical solution, the query request may be sent through a short message, this short message is provided with a particular field to be distinguished from a common short message, for enabling the terminal to effectively distinguish the type of the received short message and process the short message in time.

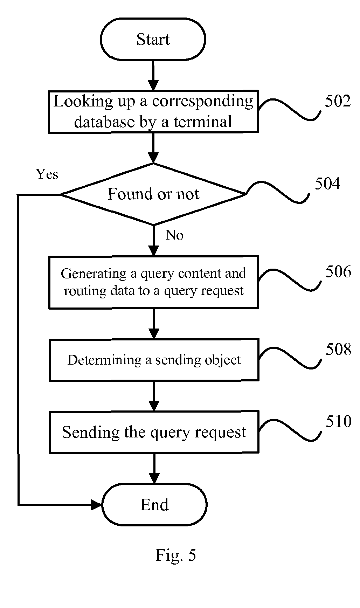

Fig. 5 shows a schematic diagram of a flow of a terminal according to an embodiment of the present invention for sending a query request.

As shown in Fig. 5, the flow of the terminal according to an embodiment of the present invention for sending the query request includes:
Step 502, the terminal looks up a corresponding database, including a contact database in its own storage space of the terminal and a cloud database, and the cloud database maintains an incidence relation with the terminal through an appointed identification number (e.g., a terminal number), for storing related information of the terminal.
Step 504, if so, the flow is terminated, if not, step 506 is performed.
Step 506, a query content and routing data are generated to a query request, wherein the query content includes the basic information of the contact to be queried, for example, a name, an attribution and an associated contact and the like, for facilitating the query, the routing data are used for limiting the forwarding times of the query request, if the forwarding time is not limited, unlimited forwarding and query may be performed between the terminals, such that the user obtains no response for a long time, the use experience of the user is influenced and the operation resources of the terminals are wasted.
Step 508, a sending object is determined, when the terminal could not query the information of the target contact from the corresponding database, the terminal needs to send the query request to enable other terminals to query in corresponding databases and send back the information of the target contact to the initial terminal, thus a proper sending object is selected to beneficially shorten the query time and increase the query success rate. Specifically, the most possibly queried object may be comprehensively determined according to the group of the target contact, the attribution, the associated contact and the common contacts of the terminal, and the like, and the query request is sent to the most possibly queried object.
Step 510, the query request is sent to the determined object, to obtain a corresponding query result.

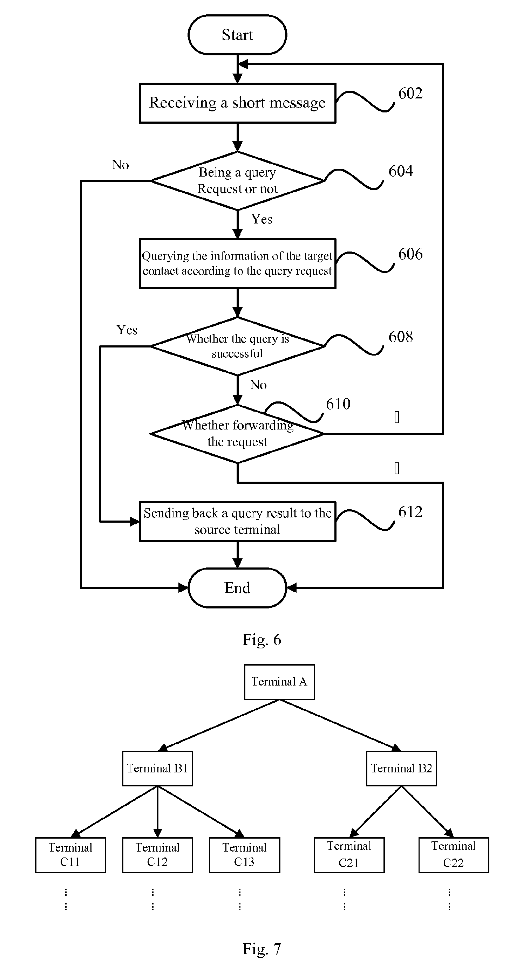

Correspondingly, Fig. 6 shows a schematic diagram of a flow of a terminal according to an embodiment of the present invention for receiving a query request.

As shown in Fig. 6, the flow of the terminal according to an embodiment of the present invention for receiving the query request includes:
step 602, the terminal receives short messages from other terminals.
Step 604, whether the received short message is the query request is judged, if so, step 606 is performed, if not, the flow is terminated, and the short message is processed according to normal conditions. Specifically, during judgment, an appointed field of the short message may be detected, if the appointed field conforms to a preset field, the short message is considered as the query request.
Step 606, the information of the target contact is queried according to the query request, including querying in the local or cloud database.
Step 608, whether the query is successful is judged, if so, step 612 is performed, if not, step 610 is performed.
Step 610, whether forwarding the query request to other terminals is judged, which may be achieved in active and passive manners, under the active condition, routing data may be set in the initially generated query request, so that the routing data are used for limiting the forwarding times of the request to avoid unlimited forwarding. Then, the terminal receiving the query request needs to analyze the routing data therein and automatically subtracts 1 from the routing data, if the processed routing data are still larger than or equal to 1, the terminal continues to forward the query request to other terminals in the case of lookup failure, if not, stops forwarding the query request and sends back a lookup failure message to the source terminal (the terminal initially generating the query request). Under the passive condition, the user of the terminal may be directly queried, and the user selects to whether continue to query by the other terminals and may appoint corresponding terminals.

If it is selected to continue to forward the query request, for the terminal receiving the query request, it is equal to return to step 602 and implement the subsequent steps, if it is selected not to continue to forward step 602, the flow is terminated, and the query failure message may be sent back to the source terminal.

Step 612, a query result is sent back to the source terminal.

Fig. 7 shows a schematic diagram of a structure of terminals for querying a contact according to an embodiment of the present invention.

As shown in Fig. 7, the structure of the terminals for querying the contact according to an embodiment of the present invention is as follows:
a terminal A queries a target contact from its own corresponding local database and the cloud database, serves as a source terminal in the case of failure, generates a query request corresponding to the target contact and itself and sends the query request to an associated terminal B1 and an associated terminal B2, and the terminal B1 and the terminal B2 query in corresponding databases. During query, the information of the target contact is firstly analyzed from the query request, for example, a name, an attribution, an associated contact and the like, and query is performed according to these information, if the query is successful, the queried information of the target contact is sent back to the terminal A according to the information of the terminal A analyzed from the query request.

In the case of query failure, the terminal B1 or the terminal B2 respectively forwards the query request to other terminals for continuously querying, for example, the terminal B1 forwards the query request to a terminal C11, a terminal C12, a terminal C13 and the like, and the terminal B2 forwards the query request to a terminal C21, a terminal C22 and the like for continuously querying.

In the case of successful query, a query result is directly sent back to the terminal A, in the case of failure, the query request may be continuously forwarded to other terminals for continuously querying.

In view of the relationship of the query sequences and forwarding information of the terminals, the terminal A may be regarded as the first grade, the terminal B1, the terminal B2 and the like are regarded as the second grade, the terminal C11, the terminal C12, the terminal C13, the terminal C21, the terminal C22 and the like are regarded as the third grade, then the technical solutions of the present invention are equivalent to query the target contact at the first grade, the second grade, the third grade ...... in sequence according to the grade sequence, so that the query database is expanded from the database of the terminal A to databases corresponding to more terminals, as a result, the query success rate is increased. But in the above-mentioned process, due to some reasons, no result is queried although the query request is continuously queried and forwarded, thus bringing "non-response" query experience to the user of the terminal A, accordingly, routing data may be added in the query request generated by the terminal A to limit the forwarding times, for example, twice, then, if the information of the corresponding contact could not be queried by the terminal C11 and the like at the third grade, query failure information is directly sent back to the terminal A, instead of unlimitedly forwarding and querying.

The technical solutions of the present invention are described in detail above in combination with the accompanying drawings. Considering that the query on the information of an unknown contact is tedious in process and low in success rate in related technology, thus the present invention provides corresponding terminals and contact lookup methods, for querying contact information absent in an own address book from the databases of other users.

The foregoing descriptions are merely preferred embodiments of the present invention, rather than limiting the protection scope of the present invention. Various modifications and alterations may be made for those skilled in the art. Any modification, equivalent substitution, improvement or the like made within the spirit and principle of the present invention shall fall into the protection scope of the present invention.

## Claims

1. A terminal, comprising:
a lookup unit, configured to look up a target contact from a database corresponding to the terminal;
a request generating unit, configured to use the terminal as a source terminal when the lookup unit fails to look up and generate a query request corresponding to the source terminal and the target contact;
a request sending unit, configured to send the query request to an associated terminal corresponding to the terminal, for enabling the associated terminal to implement the following query process: looking up, by the associated terminal, the target contact in a corresponding database according to the received query request, if finding out the target contact, sending back the information of the target contact to the source terminal, if not, re-generating the query request, and sending the query request to other associated terminals, or directly forwarding the received query request to other associated terminals, and then using the other terminals as the associated terminals to repeatedly implement the query process; and
an information receiving unit, configured to receive the information of the target contact corresponding to the query request.

2. The terminal of claim 1, further comprising:
an information setting unit, configured to set the basic information of the target contact according to a received information setting command, in order to determine the terminal associated with the source terminal, wherein the basic information comprises at least one of the following items or the combination thereof:
a user group to which the target contact belongs, an attribution and other associated contacts.

3. The terminal of claim 2, further comprising:
a data obtaining unit, configured to obtain the communication number/frequency of the source terminal with the other associated contacts; and
a numerical value comparing unit and/or a sequencing unit, wherein
the numerical value comparing unit is configured to select a corresponding terminal to use as the terminal associated with the source terminal when the communication number/frequency is larger than or equal to a preset numerical value; and
the sequencing unit is configured to sequence the other contacts and use the terminals corresponding to a preset number of other foremost sequenced contacts as the terminals associated with the source terminal.

4. The terminal of claim 1, further comprising:
an association setting unit, configured to determine the terminal associated with the source terminal according to a received association setting command.

5. The terminal of any of claims 1-4, further comprising:
a times setting unit, configured to set an allowable forwarding time according to a received time setting command, such that the request generating unit generates the query request corresponding to the source terminal, the target contact and the allowable forwarding times, and the terminal receiving the query request judges the allowable forwarding times if the allowable forwarding time is larger than or equal to 1, subtracts 1 from the allowable forwarding times to obtain a new allowable forwarding time, re-generates a new query request corresponding to the source terminal, the target contact and the new allowable forwarding times, and sends the new query request to the other associated terminals.

6. The terminal of any of claims 1-4, further comprising:
a compiling unit, configured to pack the query request to be sent into a request short message to send the query request to the associated terminal, wherein
the associated terminal detects an appointed field of the received short message,
judges that the received short message is the request short message if the appointed field conforms to a preset field, and analyzes the query request from the request short message to look up the corresponding target contact.

7. A contact lookup method, comprising:
step 202, looking up a target contact from a database corresponding to a source terminal, generating a query request corresponding to the source terminal and the target contact in the case of lookup failure, and sending the query request to an associated terminal;
step 204, obtaining the information of the target contact, wherein the information of the target contact is found by the associated terminal in the corresponding database according to the received query request, if not finding out the information of the target contact, the associated terminal re-generates the query request, and sends the query request to other associated terminals, or directly forwards the received query request to other associated terminals, and then uses the other terminals as the associated terminals to repeatedly implement step 204.

8. The contact lookup method of claim 7, wherein step 202 further comprises:
setting the basic information of the target contact according to a received information setting command, in order to determine the terminal associated with the source terminal, wherein the basic information comprises at least one of the following items or the combination thereof:
a user group to which the target contact belongs, an attribution and other associated contacts.

9. The contact lookup method of claim 8, wherein step 202 further comprises:
obtaining the communication number/frequency of the source terminal with the other associated contacts, and selecting a corresponding terminal to use as the terminal associated with the source terminal when the communication number/frequency is larger than or equal to a preset numerical value; and/or
sequencing the other contacts according to the communication number/frequency, and
using the terminals corresponding to a preset number of other foremost sequenced contacts as the terminals associated with the source terminal.

10. The contact lookup method of claim 7, wherein step 202 further comprises:
determining the terminal associated with the source terminal according to a received association setting command.

11. The contact lookup method of any of claims 7-10, further comprising:
the query request comprises a preset allowable forwarding time, if the allowable forwarding time obtained from the received query request is larger than or equal to 1,
subtracting 1 from the allowable forwarding times to obtain a new allowable forwarding time; and
re-generating a new query request corresponding to the source terminal, the target contact and the new allowable forwarding times, and sending the new query request to the other associated terminals.

12. The contact lookup method of any of claims 7-10, further comprising:
packing the query request to be sent into a request short message to send the query request to the associated terminal, wherein
the associated terminal detects an appointed field of the received short message,
judges that the received short message is the request short message if the appointed field conforms to a preset field, and analyzes the query request from the request short message to look up the corresponding target contact.

13. A terminal, comprising:
a request receiving unit, configured to receive a query request from other terminals;
a lookup unit, configured to look up a target contact from a corresponding database according to the query request;
an information sending unit, configured to analyze a source terminal from the query request when the lookup unit looks up successfully, and send the information of the target contact to the source terminal; and
a request sending unit, configured to send the re-generated query request to the associated terminal when the lookup unit fails to look up, or directly forward the received query request to the associated terminal, for enabling the associated terminal to continue to look up the target contact.

14. The terminal of claim 13, further comprising:
an information setting unit, configured to set the basic information of the target contact according to a received information setting command, in order to determine the associated terminal, wherein the basic information comprises at least one of the following items or the combination thereof:
a user group to which the target contact belongs, an attribution and other associated contacts.

15. The terminal of claim 14, further comprising:
a data obtaining unit, configured to obtain the communication number/frequency of the source terminal with the other associated contacts; and
a numerical value comparing unit and/or a sequencing unit, wherein
the numerical value comparing unit is configured to select a corresponding terminal to use as the associated terminal when the communication number/frequency is larger than or equal to a preset numerical value;
the sequencing unit is configured to sequence the other contacts and use the terminals corresponding to a preset number of other foremost sequenced contacts as the associated terminals.

16. The terminal of claim 13, further comprising:
an association setting unit, configured to determine the terminal associated with the source terminal according to a received association setting command.

17. The terminal of any of claims 13-16, wherein the query request comprises a preset allowable forwarding time, then the terminal further comprises:
a times judging unit, configured to judge whether the allowable forwarding time obtained from the received query request is larger than or equal to 1;
a times processing unit, configured to subtract 1 from the allowable forwarding times to obtain a new allowable forwarding time if the judging result of the times judging unit is yes; and
a request generating unit, configured to generate a new query request corresponding to the source terminal, the target contact and the new allowable forwarding times, and
the request sending unit sends the new query request to the other associated terminals.

18. The terminal of any of claims 13-16, further comprising:
a field detecting unit, configured to detect an appointed field of a received short message, and judge that the received short message is a request short message if the appointed field conforms to a preset field; and
an analyzing unit, configured to analyze the query request from the request short message, for enabling the lookup unit to look up the corresponding target contact,
when the field detecting unit judges that the short message is the request short message.

19. The terminal of any of claims 13-16, further comprising:
a compiling unit, configured to pack the query request to be sent into a request short message to send the query request to the associated terminal.

20. A contact lookup method, comprising:
receiving a query request from other terminals;
looking up a target contact from a corresponding database according to the query request; and
analyzing a source terminal from the query request when the lookup is successful, and
sending the information of the target contact to the source terminal, if not, re-generating the query request, and sending the re-generated query request to the associated terminal, or directly forwarding the received query request to the associated terminal, for enabling the associated terminal to continue to look up the target contact.

21. The contact lookup method of claim 20, wherein before sending the query request, the method further comprises:
setting the basic information of the target contact according to a received information setting command, in order to determine the associated terminal, wherein the basic information comprises at least one of the following items or the combination thereof:
a user group to which the target contact belongs, an attribution and other associated contacts.

22. The contact lookup method of claim 21, further comprising:
obtaining the communication number/frequency with the other associated contacts,
and when the communication number/frequency is larger than or equal to a preset numerical value, selecting a corresponding terminal to use as the associated terminal;
and/or
sequencing the other contacts according to the communication number/frequency, and
using the terminals corresponding to a preset number of other foremost sequenced contacts as the associated terminals.

23. The contact lookup method of claim 20, wherein before sending the query request, the method further comprises:
determining the associated terminal according to a received lookup setting command.

24. The contact lookup method of any of claims 20-23, wherein the query request comprises a preset allowable forwarding time;
in the case of lookup failure, if the allowable forwarding time obtained from the received query request is larger than or equal to 1, 1 is subtracted from the allowable forwarding times to obtain a new allowable forwarding time; and
a new query request corresponding to the source terminal, the target contact and the new allowable forwarding times is re-generated, and the new query request is sent to the associated terminal.

25. The contact lookup method of any of claims 20-23, further comprising:
detecting an appointed field of a received short message, judging that the received short message is the request short message if the appointed field conforms to a preset field, and analyzing the query request from the request short message, to look up the corresponding target contact.

26. The contact lookup method of any of claims 20-23, further comprising:
packing the query request to be sent into a request short message to send the query request to the associated terminal.
